# EUROPÄISCHE PATENTSCHRIFT

(11) **EP 4 453 453 B1**
(45) Veröffentlichungstag und Bekanntmachung des Hinweises auf die Patenterteilung: **18.02.2026**
(21) Anmeldenummer: 22840579.1
(22) Anmeldetag: 15.12.2022
(51) Int. Cl.: F16K 5/04, F16K 11/085, B29C 43/02, B29C 43/14, B29C 33/00, B29C 45/00, F16J 15/06, F16J 15/10, B29K 21/00, B29L 31/26, B29L 31/00

(54) **VERFAHREN ZUR HERSTELLUNG EINES DICHTUNGSELEMENTS, DICHTUNGSELEMENT SOWIE VERWENDUNG EINES NACH EINEM SOLCHEN VERFAHREN HERGESTELLTEN DICHTUNGSELEMENTS**
METHOD FOR PRODUCING A SEALING ELEMENT, SEALING ELEMENT AND USE OF A SEALING ELEMENT PRODUCED ACCORDING TO SUCH A METHOD
PROCÉDÉ DE FABRICATION D'UN ÉLÉMENT D'ÉTANCHÉITÉ, ÉLÉMENT D'ÉTANCHÉITÉ ET UTILISATION D'UN ÉLÉMENT D'ÉTANCHÉITÉ FABRIQUÉ SELON UN TEL PROCÉDÉ

(30) Priorität: 20.12.2021 DE 102021133871
(43) Veröffentlichungstag der Anmeldung: 30.10.2024
(73) Patentinhaber: VR Automotive Dichtungssysteme GmbH, 98673 Auengrund-Crock (DE)
(72) Erfinder: BÖSERT, Timmy, 98673 Auengrund-Crock (DE); SCHAUB, Martin, 98673 Auengrund-Crock (DE); STEINKE, Stephan, 98673 Auengrund-Crock (DE)
(74) Vertreter: Kuhnen & Wacker Patent- und Rechtsanwaltsbüro PartG mbB
(86) Internationale Anmeldenummer: PCT/EP2022/086198
(87) Internationale Veröffentlichungsnummer: WO 2023/117706

(56) Entgegenhaltungen:
- WO-A1-2022/249132
- CN-U- 212 564 523
- DE-T5- 112017 002 570
- JP-A- 2001 159 471
- US-A- 3 098 506
- US-A- 5 131 667
- US-A1- 2010 319 796
- US-A1- 2020 180 187

## Beschreibung

Die vorliegende Erfindung betrifft ein Dichtungselement mit einer im Wesentlichen rechteckigen Grundform mit einer ersten Erstreckungsrichtung und einer zweiten Erstreckungsrichtung sowie einer Mehrzahl an Öffnungen, ein Verfahren zur Herstellung eines solchen Dichtungselements sowie die Verwendung eines nach einem solchen Verfahren hergestellten Dichtungselements.

Ein solches Dichtungselement ist beispielsweise aus der EP 3 385 583 A1 oder der WO 2021/087106 bekannt. US2020/180187A1 offenbart ein Dichtungselement gemäß dem Kennzeichen des Anspruchs 1.

In vielen "alten" Technologiefeldern, wie beispielsweise der in Deutschland etablierten Automobilindustrie, liegt der Fokus heutzutage nicht mehr ausschließlich auf der Entwicklung neuer Produkte. Vielmehr rückt die Verbesserung bestehender Technologien zur Steigerung der Effizienz und zur Senkung der Kosten in den Vordergrund. Dies betrifft alle Ebenen, vom Motor bis zur Unterlegscheibe. Durch die Zunahme an Funktionen besteht zusätzlich zu den vorstehend genannten Anforderungen noch die Herausforderung, anfallende Aufgaben auf immer weniger Bauraum zu lösen.

Ein Beispiel für die vorstehend beschriebene Problematik ist das Thermomanagement-Modul eines Kraftfahrzeugs. Auch bedingt durch die zunehmende Elektrifizierung des Antriebsstrangs sind heutzutage eine Vielzahl von Kühlmittelströmen, teilweise auch unterschiedlicher Temperaturniveaus, zu regeln. Aus diesem Grund werden zunehmend Drehschieberventile mit mehreren internen Kanälen sowie mehreren Anschlüssen verwendet. Diese sind sehr kompakt und mittels ihrer verschiedenen Stellungen in der Lage, bedarfsgerecht gleichzeitig verschiedene Kühlmittelströme zu realisieren und zu kontrollieren. Ein solches Drehschieberventil bedarf einer speziellen Dichtung, die zwischen dem mit verschiedenen Anschlüssen versehenen Gehäuse und dem im Inneren des Gehäuses angeordneten Drehschieber in einer solchen Weise abdichtet, dass nur die beabsichtigten Durchströmungen des Ventilkörpers möglich sind.

Die eingangs erwähnte EP 3 385 583 A1 wurde als nächstliegender Stand der Technik identifiziert. Sie beschreibt ein solches Mehrwegeventil, bestehend aus einem Gehäuse mit einer inneren Kavität und mehreren Anschlüssen, einem drehbar vorgesehenen und mit internen Kanälen ausgestatteten zylindrischen Ventilkörper, welcher innerhalb der Kavität des Gehäuses angeordnet ist, sowie einem Dichtungselement. Das Dichtungselement besitzt eine im Wesentlichen hülsenartige Form und weist mehrere Öffnungen auf. Es ist derart angeordnet, dass es den zylindrischer Ventilkörper innerhalb der Kavität des Gehäuses umschließt.

Die ebenfalls eingangs erwähnte WO 2021/087106 weist ein der EP 3 385 583 A1 ähnliches Dichtungselement auf. Es unterscheidet sich insofern von letzterer, als dass es keine vollständige Hülsenform aufweist, sondern diese über die komplette axiale Länge in einem gewissen Abschnitt unterbrochen ist.

Das chinesische Gebrauchsmuster CN 212 564 523 U beschreibt einen Flüssigkeitsverteiler, bestehend aus einem Gehäuse, einer Drehwelle und einem Flanschverbinder. Durch Drehen der Drehwelle kann der Flanschverbinder unterschiedliche Flüssigkeiten auswählen. Die Teile können mittels Kunststoff-Spritzguss hergestellt werden, was zu einer einfachen Struktur und niedrigen Herstellungskosten führt.

Die US-amerikanische Patentanmeldung US 2010/319796 A1 betrifft ein Mehrwegeventil mit Ventilgehäuse, Richtungskomponente und elastomerer Dichtung. Die Richtungskomponente im Gehäuseinneren schafft durch Drehung einen Kanal, der je nach Ausrichtung verschiedene Öffnungskombinationen verbindet. Die elastomere Dichtung zwischen Richtungskomponente und Gehäuse sorgt für fluiddichte Abdichtung und geringe Reibung.

Den Dichtungselementen der vorstehend beiden erstgenannten Schriften ist gemein, dass ihre Grundform auch im nicht verbauten Zustand wenigstens teilweise der eines Hohlzylinders beziehungsweise einer Hülse entspricht. Die anspruchsvolle, dreidimensionale Form stellt hohe Anforderungen an die Herstellung des Dichtungselements. Ein derartiges Spritzgussverfahren benötigt ein aufwändig herzustellendes Spritzgusswerkzeug mit mehreren Schiebern oder wenigstens einem nachgelagerten Stanz- oder Schneidevorgang. Daraus resultieren für den Hersteller hohe Produktionskosten, wodurch auch der Einzelteilpreis für den Abnehmer hoch ausfällt.

Es ist demnach die Aufgabe der Erfindung, ein Dichtungselement sowie ein Herstellungsverfahren für ein Dichtungselement zu beschreiben, welches technisch einfacher und somit kostengünstiger herzustellen ist, als dies bei aus dem Stand der Technik bekannten Dichtungselementen der Fall ist. Die Verwendung eines nach einem solchen Verfahren hergestellten Dichtungselements ist ein weiterer Aspekt der Erfindung.

Gelöst wird diese Aufgabe durch ein Dichtungselement mit einer im abgewickelten Zustand im Wesentlichen rechteckigen Grundform mit einer ersten Erstreckungsrichtung und einer zweiten Erstreckungsrichtung sowie einer Mehrzahl an Öffnungen und einer nahezu zylinderförmigen Endkontur, welches dadurch gekennzeichnet ist, dass das Dichtungselement aus wenigstens zwei Werkstoffen hergestellt ist, wobei ein zweiter Werkstoff einen ersten Werkstoff in einer dritten Erstreckungsrichtung, welche orthogonal zu der ersten Erstreckungsrichtung und der zweiten Erstreckungsrichtung angeordnet ist, vollständig oder teilweise bedeckt. Vorteilhafte Weiterbildungen sind Gegenstand der weiteren abhängigen Verfahrensansprüche 2 bis 16.

Die weiteren Aspekte werden durch ein Verfahren zur Herstellung eines solchen Dichtungselements gemäß Anspruch 17 und dessen Verwendung gemäß Anspruch 22 gelöst. Vorteilhafte Weiterbildungen des Herstellungsverfahrens sind Gegenstand der abhängigen Ansprüche 18 bis 21, während vorteilhafte Weiterbildungen der Verwendung Gegenstand der abhängigen Ansprüche 23 bis 25 sind.

In ihrer allgemeinsten Form sieht die vorliegende Erfindung erstmals ein Herstellungsverfahren für ein Dichtungselement vor, bei welchem die Urformung mittels Spritzgussverfahren oder Formpressverfahren in einer abgewickelten Form durchgeführt wird, bevor eine nahezu zylinderförmige Endkontur gebildet wird. Ein solches Verfahren stellt gegenüber dem Stand der Technik eine kostengünstige und einfach zu beherrschende Möglichkeit dar, ein nahezu zylinderförmiges und dergestalt einsetzbares Dichtungselement herzustellen. Dabei kann auf komplizierte dreidimensionale Geometrien des Vulkanisationswerkzeugs, zusätzliche Schieber oder auf weitere Prozessschritte zur Nach- und/oder Weiterbehandlung verzichtet werden.

Zur Urformung wird ein elastomerer Werkstoff erhitzt und mit Druck in einem Vulkanisationswerkzeug geformt. Die richtige Kombination aus Temperatur, Druck und weiterer Parameter ist dabei entscheidend, um die für das Vulkanisieren benötigte Zähflüssigkeit des elastomeren Werkstoffs zu erhalten. Neben der beschriebenen Ausführungsform mit einem elastomeren Werkstoff sind auch Ausführungsformen vorstellbar, bei denen wenigstens zwei elastomere Werkstoffe zum Einsatz kommen. Diese können entweder homogen vermischt oder heterogen angeordnet sein. Letzteres bietet beispielsweise die Möglichkeit, einen Kern aus einem elastomeren Werkstoff und einen Überzug aus einem zweiten elastomeren Werkstoff zu realisieren.

Die Kavität des Vulkanisationswerkzeugs entspricht der abgewickelten Form des herzustellenden Dichtungselements. Für eine erste Ausführungsform des erfindungsgemäßen Herstellungsverfahrens hat die Kavität eine im Wesentlichen rechteckige Grundform mit einer ersten Erstreckungsrichtung und einer orthogonal zu dieser angeordneten zweiten Erstreckungsrichtung. Die erste Erstreckungsrichtung und die zweite Erstreckungsrichtung spannen demnach einen im Wesentlichen rechteckigen Rahmen auf, der eine Mehrzahl an Öffnungen umgibt. Die Öffnungen sind durch Stege, die mit dem Rahmen verbunden sind und ebenfalls beim Spritzgussverfahren oder beim Formpressverfahren urgeformt werden, voneinander abgetrennt.

Wird der Erhalt eines Dichtungselements mit Eigenschaften angestrebt, die allein mit elastomeren Werkstoffen nicht zu realisieren sind, so ist es auch möglich, eine zusätzliche Komponente, wie beispielsweise eine Folie, in das Vulkanisationswerkzeug einzulegen und das Dichtungselement mit dieser chemisch oder mechanisch zu verbinden. Die Verbindung mit der zusätzlichen Komponente wird somit bereits bei der Bildung des Dichtungselements hergestellt.

Im Anschluss an das Spritzgussverfahren oder das Formpressverfahren wird das entstandene Dichtungselement in eine nahezu zylinderförmige Endkontur aufgerollt. Die erste Erstreckungsrichtung entspricht dabei der Umfangsrichtung der zylinderförmigen Endkontur, während die zweite Erstreckungsrichtung koaxial zur gedachten Mittelachse verläuft. Demzufolge erfolgt eine elastische Verformung durch Biegung in der ersten Erstreckungsrichtung, nicht jedoch in der zweiten Erstreckungsrichtung.

Zur Reduzierung der durch die elastische Verformung eingebrachten Vorspannung wird gemäß einer vorteilhaften Ausführungsform vorgeschlagen, einzelnen Segmenten des Dichtungselements bereits beim Spritzgussverfahren oder beim Formpressverfahren eine teilzylindrische Form zu verleihen. Dazu wird das Vulkanisationswerkzeug derart ausgelegt, dass alle Abschnitte des Rahmens, die entlang der ersten Erstreckungsrichtung ausgerichtet sind, sowie gegebenenfalls in der gleichen Richtung verlaufende Stege, entsprechend gebogene Geometrien aufweisen. Ausgenommen davon sind diejenigen Stellen in der ersten Erstreckungsrichtung des Rahmens, an welchen die in der zweiten Erstreckungsrichtung verlaufenden Stege auf den Rahmen treffen. Stark abstrahiert kann man sagen, dass die Kavität des Vulkanisationswerkzeugs und somit auch das damit hergestellte Dichtungselement nach dem Spritzgussverfahren oder dem Formpressverfahren eine wellenartige Form aufweist. Die Stellen, an welchen die in der zweiten Erstreckungsrichtung verlaufenden Stege auf den Rahmen treffen, stellen dabei die Wellenberge dar, die Mitten der vorgeformten Segmente hingegen die Wellentäler.

In einer weiteren Ausführungsform der Erfindung werden ein oder mehrere Ausgangsstoffe eines Elastomers und/oder eines Polymers als Werkstoff verwendet. Insbesondere sind auch Varianten denkbar, bei denen manche Abschnitte des Dichtungselements aus einem Elastomer bestehen und andere Abschnitte aus einem Polymer. Sowohl Elastomere, als auch Polymere weisen in ihrer finalen Form ein gutes Verhältnis aus Flexibilität und Reibwiderstand auf und werden häufig als Dichtungsmaterial verwendet.

In einer vorteilhaften Ausführungsform wird das Dichtungselement nach dem formgebenden Vulkanisationsprozess getempert. Dadurch werden die Bindungen der Moleküle untereinander erhöht und die elastischen Eigenschaften des Dichtungselements verbessert.

In einer weiteren vorteilhaften Ausführungsform wird das Dichtungselement teilweise oder komplett beschichtet. Denkbar ist hier beispielsweise eine PTFE-Beschichtung an allen Abschnitten, welche im späteren Betrieb eine dynamische Dichtfläche ausbilden. Mittels einer solchen Beschichtung kann der Reibwiderstand der entsprechenden Gleitpaarung reduziert werden, ohne dass die Dichtungseigenschaften davon negativ beeinflusst werden.

Gemäß einem oder mehrerer Verwendungsansprüche, welche unten ausführlicher beschrieben werden, dient das erfindungsgemäße Dichtungselement zur Abdichtung eines zylindrischen Drehschiebers eines Mediumverteilers gegenüber dessen Gehäuse. Solche Mediumverteiler werden insbesondere in Anwendungen eingesetzt, bei denen mehrere, voneinander im Wesentlichen unabhängige, Fluidströme gleichzeitig geregelt werden müssen. Die verschiedenen Fluidströme können sich dabei unter anderem in ihrer Temperatur, ihrem Druck und ihrem Volumenstrom unterscheiden. Insbesondere Letzteres kann unterschiedlich groß dimensionierte Anschlüsse im Gehäuse sowie Kanäle im zylindrischen Drehschieber erfordern. Demzufolge sind weitere Ausführungsformen des erfindungsgemäßen Dichtungselements vorstellbar, bei welchen einzelne oder mehrere der Öffnungen unterschiedliche Größen aufweisen. Selbstverständlich sind auch Varianten denkbar, bei denen mehrere Öffnungen die gleiche Größe haben und einzelne oder mehrere weitere Öffnungen eine andere Größe.

In Anlehnung an die vorstehend beschriebenen, potenziell unterschiedlichen Größen, sind weiterhin Ausführungsformen vorstellbar, bei denen die Öffnungen des Dichtungselements unterschiedliche Formen haben. Je nach Eignung im individuellen Anwendungsfall können die Öffnungen beispielsweise rechteckige, runde oder ellipsenförmige Formen aufweisen, wobei selbstverständlich auch weitere geometrische Formen denkbar sind. Dies umfasst insbesondere auch asymmetrische Formen. Ein einzelnes Dichtungselement kann dabei auch Öffnungen verschiedener Formen aufweisen.

Vom Anwendungsfall hängt neben der Größe und der Form auch die Anordnung der Mehrzahl an Öffnungen ab. Sowohl in der ersten, als auch in der zweiten Erstreckungsrichtung gesehen können ein oder mehrere der Öffnungen nebeneinander angeordnet sein. Ein wiederkehrendes Muster beziehungsweise eine Symmetrie bei der Anordnung ist dabei möglich, jedoch sind auch asymmetrische Anordnungen denkbar.

Die Rahmen und Stege des Dichtungselements können ein im Wesentlichen rechteckiges Querschnittsprofil aufweisen. Ebenso ist es möglich, dass das Querschnittsprofil eine runde, dreieckige, gebogene oder eine andere Form zeigt. Die Auswahl erfolgt im Einzelfall in Abhängigkeit der individuellen Voraussetzungen.

In einer Verwendung des erfindungsgemäßen Dichtungselements bewirkt dieses eine statische Abdichtung gegenüber dem Gehäuse eines Mediumverteilers und eine dynamische Abdichtung gegenüber dem zylindrischen Drehschiebers. Um sicher zu stellen, dass sich das Dichtungselement im Betrieb nicht relativ zum Gehäuse des Mediumverteilers verdrehen kann, weist es in einer Ausführungsform an der radial äußeren Seite der nahezu zylinderförmigen Endkontur eine oder mehrere Nuten auf. In diese Nut oder diese Nuten greifen ein oder mehrere korrespondierende Federn ein, welche an der radial inneren Seite des Gehäuses des Mediumverteilers vorgesehen sind.

Ebenso ist es möglich, die vorstehend beschriebene Feder-Nut-Verbindung umzukehren. Gemäß einer weiteren Ausführungsform werden demnach ein oder mehrere Federn an der radial äußeren Seite der nahezu zylinderförmigen Endkontur des Dichtungselements vorgesehen. Diese greifen wiederum in ein oder mehrere korrespondierende Nuten ein, welche auf der radial inneren Seite des Gehäuses des Mediumverteilers angeordnet sind. Die Federn sind dabei ein immanenter Bestandteil des Dichtungselements, welche beim Vulkanisationsprozess urgeformt werden.

Insbesondere mit den vorstehend beschriebenen Ausführungsformen, welche eine Feder-Nut-Verbindung zwischen dem Dichtungselement und dem umgebenden Gehäuse eines Mediumverteilers lehren, kann das Dichtungselement ferner die Funktion einer Lagerschale für den zylindrischen Drehschieber erfüllen. Radiale Kräfte können somit über das Dichtungselement aufgenommen werden, wenn dessen Steifigkeit ausreichend hoch ist. Dies bietet die Möglichkeit, ein oder mehrere Lager der den zylindrischen Drehschieber antreibenden Welle einzusparen, was wiederum Vorteile bezüglich des Bauraums und der Kosten mit sich bringen kann. Des Weiteren können Überbestimmtheiten und Achsversätze zwischen dem zylindrischen Drehschieber und dem Gehäuse des Mediumverteilers über die dynamische Dichtfläche zwischen dem Dichtungselement und dem zylindrischen Drehschieber besser kompensiert werden.

Gemäß einer alternativen Ausführungsform besteht die Möglichkeit, dass das Dichtungselement rotatorisch gegenüber dem zylindrischen Drehschieber fixiert ist, mit welchem es folglich eine statische Dichtfläche ausbildet. In diesem Fall besteht die dynamische Dichtfläche zwischen dem Dichtungselement und dem das Dichtungselement radial umgebenden Gehäuse des Mediumverteilers. Zur Gewährleistung dieser Relation kann das Dichtungselement an der radial inneren Seite seiner zylinderförmigen Kontur ein oder mehrere Nuten aufweisen. In diese Nut oder diese Nuten greifen ein oder mehrere korrespondierende Federn ein, welche an der radial äußeren Seite des zylindrischen Drehschiebers des Mediumverteilers vorgesehen sind.

Ebenso ist es möglich, die vorstehend beschriebene Feder-Nut-Verbindung umzukehren. Gemäß einer weiteren Ausführungsform werden demnach ein oder mehrere Federn an der radial inneren Seite der nahezu zylinderförmigen Endkontur des Dichtungselements vorgesehen. Diese greifen wiederum in ein oder mehrere korrespondierende Nuten ein, welche auf der radial äußeren Seite des zylindrischen Drehschiebers angeordnet sind.

Im Folgenden wird die vorliegende Erfindung anhand der Zeichnungen detaillierter dargestellt. Darin zeigen:
- Fig. 1a: eine erste Ausführungsform eines erfindungsgemäßen Dichtungselements in Draufsicht;
- Fig. 1b: das erfindungsgemäße Dichtungselement gemäß Fig. 1a in Seitenansicht;
- Fig. 2a bis 2g: verschiedene Querschnittsprofile eines Abschnitts des erfindungsgemäßen Dichtungselements;
- Fig. 3a: eine zweite Ausführungsform des erfindungsgemäßen Dichtungselements in Draufsicht;
- Fig. 3b: das erfindungsgemäße Dichtungselement gemäß Fig. 3a in Seitenansicht;
- Fig. 4: das Dichtungselement gemäß der Fig. 3a und 3b in seiner nahezu zylinderförmigen Endkontur im verbauten Zustand;
- Fig. 5a: eine dritte Ausführungsform des erfindungsgemäßen Dichtungselements in Draufsicht;
- Fig. 5b: das Dichtungselement gemäß Fig. 5a in Seitenansicht;
- Fig. 6: das Dichtungselement gemäß der Fig. 5a und 5b in seiner nahezu zylinderförmigen Endkontur im verbauten Zustand; und
- Fig. 7: eine vierte Ausführungsform des erfindungsgemäßen Dichtungselements im verbauten Zustand.

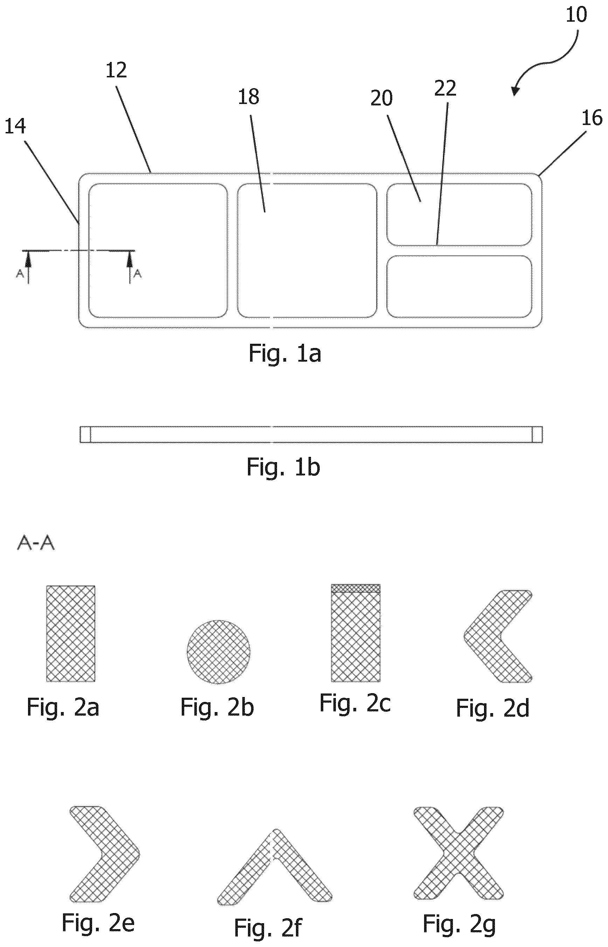

Die Fig. 1a bis 7 zeigen verschiedene Ausführungsformen und Zustände eines erfindungsgemäßen Dichtungselements. Das zur Herstellung eines solchen Dichtungselements benötigte Verfahren wird anhand dieser Figuren erläutert, ohne dass die einzelnen Verfahrensschritte anhand eigener Zeichnungen illustriert werden.

Fig. 1a zeigt eine erste Ausführungsform eines erfindungsgemäßen Dichtungselements 10 in einer Draufsicht. Wie aus der gemeinsamen Betrachtung mit Fig. 1b, welche eine Seitenansicht eben jenes Dichtungselements 10 der Fig. 1a zeigt, handelt es sich dabei um eine im Wesentlichen flache und ebene Struktur. Das Dichtungselement 10 beinhaltet eine erste Erstreckungsrichtung 12 und eine im Wesentlichen orthogonal zu dieser angeordnete zweite Erstreckungsrichtung 14, durch welche ein Rahmen 16 des Dichtungselements 10 aufgespannt wird, der im Wesentlichen die Form eines Rechtecks hat. Darüber hinaus umfasst das Dichtungselement 10 mehrere Öffnungen, von denen einige in Fig. 1a exemplarisch mit den Bezugszeichen 18 und 20 versehen sind. Die Öffnungen 18, 20 sind jeweils durch Stege 22 voneinander abgetrennt, welche entweder an weitere Stege 22 oder den Rahmen 16 anschließen.

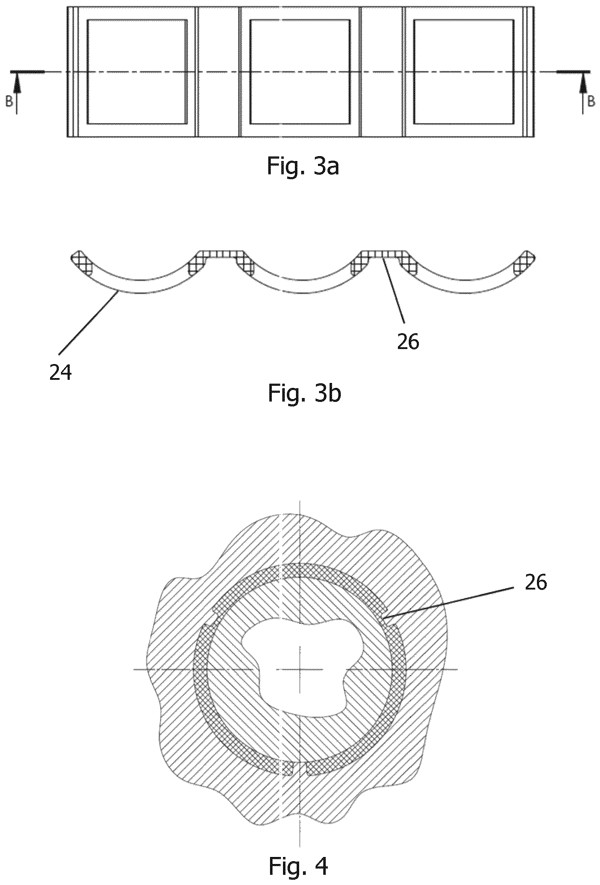

Die Fig. 1a und 1b zeigen ein Dichtungselement 10, wie es vor dem abschließenden Schritt eines erfindungsgemäßen Herstellungsverfahrens vorliegt. Um ein solches zu erhalten, wird das Dichtungselement 10 in einem Spritzgussverfahren oder Formpressverfahren urgeformt. Die Kavität des zugehörigen Vulkanisationswerkzeugs hat folglich exakt die Gestalt des zu erzeugenden Dichtungselements 10, jedoch in abgewickelter Form. Im finalen Verfahrensschritt wird das in abgewickelter Form urgeformte Dichtungselement 10 aufgerollt, indem die beiden Abschnitte des Rahmens 16, die sich in der zweiten Erstreckungsrichtung 14 befinden, zueinander geführt werden. Dadurch entsteht eine nahezu zylinderförmige Endkontur, bei welcher die ursprüngliche erste Erstreckungsrichtung 12 entlang des Umfangs verläuft, während die ursprüngliche zweite Erstreckungsrichtung 14 koaxial zu einer gedachten Mittelachse der zylinderförmigen Endkontur angeordnet ist. Die weiter unten ausführlich behandelte Fig. 4 zeigt ein derart aufgerolltes Dichtungselement 10 in seiner nahezu zylinderförmigen Endkontur im verbauten Zustand.

In den Fig. 2a bis 2g sind mögliche Formen eines Querschnittsprofils des Rahmens 16 und/oder der Stege 22 dargestellt. Wie in Fig. 2a gezeigt, kann ein solches Querschnittsprofil eine rechteckige Form aufweisen, wobei die inneren und äußeren Ecken und Kanten je nach individuellem Anwendungsfall eine schwächer oder stärker ausgeprägte Abrundung aufweisen können. Gemäß Fig. 2c kann diese auch an einer oder mehreren Seiten, vorzugsweise auf der Seite, die im Betrieb eine dynamische Dichtfläche ausbildet, beschichtet sein. In Frage kommt hierfür beispielsweise eine PTFE-Beschichtung. Ebenso ist es möglich, dass das Dichtungselement 10 aus zwei Werkstoffen besteht, die während des Vulkanisationsprozesses miteinander verbunden werden. Weiterhin ist eine runde Querschnittsform denkbar (Fig. 2b), ebenso wie eine dreieckige Querschnittsform, die verschieden orientiert sein kann (Fig. 2d bis 2f). Darüber hinaus ist auch eine kreuz- beziehungsweise X-förmige Querschnittsform vorstellbar (Fig. 2g), ebenso weitere, nicht in den Fig. 2a bis 2g dargestellte Formen. Vorzugsweise weisen alle Abschnitte des Rahmens 16 und Stege 22 eines Dichtungselements 10 die gleiche Querschnittsform auf. Es sind jedoch auch Ausführungsformen vorstellbar, bei denen einzelne Abschnitte des Rahmens 16 und/oder einzelne oder mehrere Stege 22 eine abweichende Querschnittsform aufweisen. Die entsprechende Auswahl wird jeweils für den Einzelfall aufgrund der individuellen Einsatzbedingungen getroffen.

Die Fig. 3a und 3b zeigen eine weitere Ausführungsform des erfindungsgemäßen Dichtungselements 10. Die in Fig. 3a dargestellte Draufsicht entspricht dabei exakt derjenigen aus Fig. 1a. Wie aus der korrespondierenden Seitenansicht in Fig. 3b zu erkennen ist, sind einzelne Abschnitte des Dichtungselements 10, die sich in der ersten Erstreckungsrichtung 12 befinden, teilzylindrisch vorgeformt. Das betrifft einerseits die Abschnitte des Rahmens 16, die sich in der ersten Erstreckungsrichtung 12 befinden, kann aber auch die Stege 22 inkludieren, die sich ebenfalls in der ersten Erstreckungsrichtung 12 befinden. Der Radius dieser Teilschalen 24 entspricht dabei näherungsweise dem Radius des Dichtungselements 10 in seiner nahezu zylinderförmigen Endkontur. Ähnlich wie das Dichtungselement 10 aus den Fig. 1a und 1b kann das Dichtungselement 10 der Fig. 3a und 3b mit einem vergleichsweise simplen Vulkanisationswerkzeug hergestellt werden. Zur Herstellung eines Dichtungselements 10 mit einer solchen Form kann auf komplexe Schieber während des Spritzgussprozesses ebenso verzichtet werden wie auf eine komplexe, beispielsweise stanzende oder schneidende, Nachbearbeitung.

Ein Vorteil einer solchen, mit Teilschalen 24 vorgeformten Ausführungsform des Dichtungselements 10 besteht darin, dass beim Bilden der nahezu zylinderförmigen Endkontur weniger Biegespannung auf einige Teile des Dichtungselements 10 ausgeübt wird. Dies begünstigt eine zuverlässigere Erfüllung seiner Dichtungsfunktion. Darüber hinaus reduziert es die Reibung und das daraus resultierende Widerstandsmoment, was bei der Auslegung des Antriebs einbezogen werden kann.

Gemäß einer vorteilhaften Ausführungsform ist das erfindungsgemäße Dichtungselement 10 derart gestaltet, dass sein Umfang in der nahezu zylinderförmigen Endkontur eine oder mehrere Nuten 26 enthält. Diese werden bereits bei der Urformung durch eine entsprechende Gestaltung des Vulkanisationswerkzeugs vorgesehen. Im verbauten Zustand, welcher in Fig. 4 illustriert ist, bilden diese Nuten zusammen mit korrespondierenden Federn eines Gehäuses eines Mediumverteilers, welcher das Dichtungselement 10 an seiner radial äußeren Seite umschließt, eine formschlüssige Verbindung. Diese Verbindung bewirkt eine Verdrehsicherung und gewährleistet derart die korrekte Lage des Dichtungselements 10 im Gehäuse.

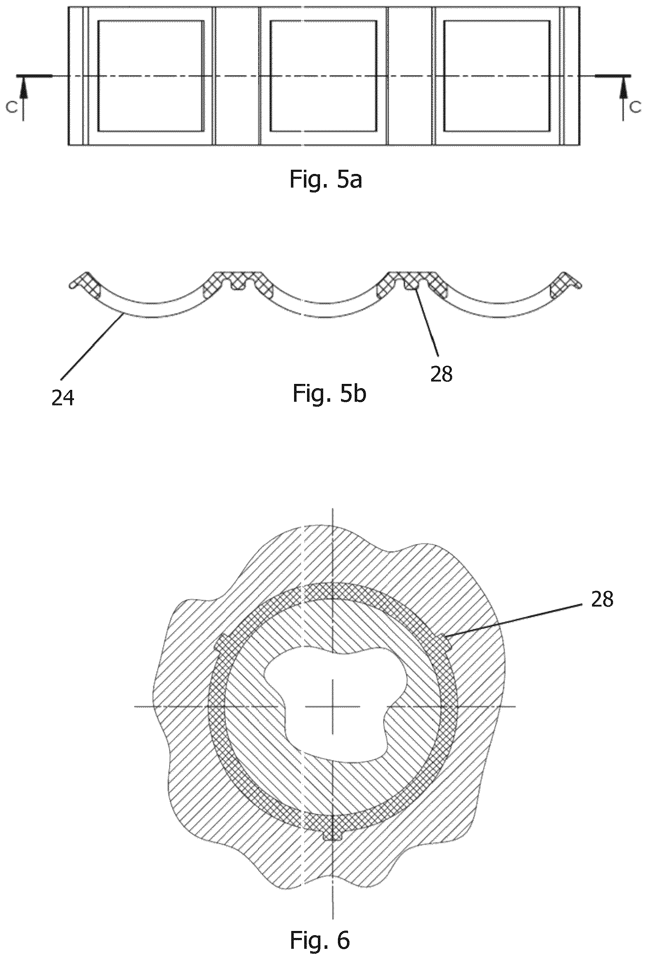

Die Fig. 5a und 5b zeigen eine weitere Ausführungsform des erfindungsgemäßen Dichtungselements 10, bei welchem gegenüber dem Ausführungsbeispiel der Fig. 3a und 3b die Feder-Nut-Verbindung invertiert wurde. Von der nahezu zylinderförmigen Endkontur des Dichtungselements 10 stehen demnach eine oder mehrere Federn 28 in einer radial äußeren Richtung hervor. Auch diese Form wird bereits bei der Gestaltung des Vulkanisationswerkzeugs für die Urformung vorgesehen.

Wie in Fig. 6 dargestellt, korrespondieren diese eine oder mehreren Federn 28 im verbauten Zustand mit einer oder mehreren entsprechenden Nuten im Gehäuse des Mediumverteilers. Analog zum vorangegangenen Beispiel bewirkt eine solche Gestaltung eine Verdrehsicherung des Dichtungselements 10 gegenüber dem Gehäuse des Mediumverteilers.

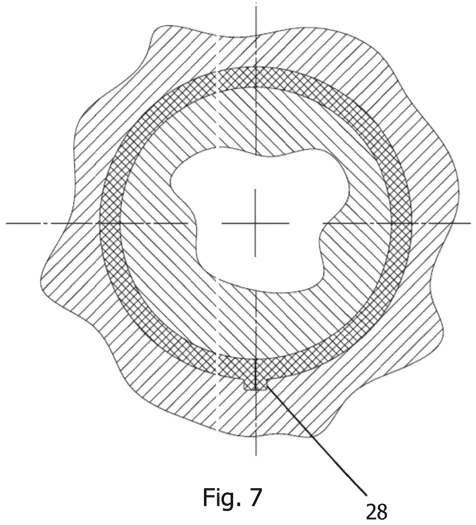

Fig. 7 zeigt demgegenüber eine Ausführungsform des Dichtungselements 10, welches mit einer einzelnen Feder 28 auskommt. Die gewünschte Verdrehsicherung wird durch das Zusammenspiel mit einer korrespondierenden Feder im Gehäuse hergestellt. Die entsprechende Auswahl einer angemessenen Anzahl an Feder-Nut-Verbindungen und deren Ausrichtung wird jeweils für den Einzelfall aufgrund der individuellen Einsatzbedingungen getroffen.

Das zuletzt genannte Ausführungsbeispiel, bei welchem die Federn 28 als Teil des Dichtungselements 10 ausgebildet sind, ermöglicht geringere lokale Einbußen bei der Höhe des Querschnittprofils. Die Gesamtstabilität und -steifigkeit des Dichtungselements 10 kann somit vergrößert werden. Da die Nuten bei diesem Ausführungsbeispiel im Gehäuse des Mediumverteilers vorgesehen werden, steigt zur Wahrung einer Mindestwandstärke des Gehäuses dessen Durchmesser. Daraus lässt sich bereits ableiten, dass die Auswahl der Gestaltungsform der Feder-Nut-Verbindung jeweils für den individuellen Anwendungsfall und aufgrund der Einsatzbedingungen zu erfolgen hat.

### Bezugszeichenliste

- 10: Dichtungselement
- 12: Erste Erstreckungsrichtung
- 14: Zweite Erstreckungsrichtung
- 16: Rahmen
- 18: Öffnung
- 20: Öffnung
- 22: Steg
- 24: Teilschale
- 26: Nut
- 28: Feder

## Patentansprüche

1. Dichtungselement (10) mit einer im abgewickelten Zustand im Wesentlichen rechteckigen Grundform mit einer ersten Erstreckungsrichtung (12) und einer zweiten Erstreckungsrichtung (14) sowie einer Mehrzahl an Öffnungen (18, 20) und einer nahezu zylinderförmigen Endkontur, wobei das Dichtungselement (10) mittels einem Spritzgussverfahren oder einem Formpressverfahren urgeformt ist, **dadurch gekennzeichnet, dass**
das Dichtungselement (10) aus wenigstens zwei Werkstoffen hergestellt ist, wobei ein zweiter Werkstoff einen ersten Werkstoff in einer dritten Erstreckungsrichtung, welche orthogonal zu der ersten Erstreckungsrichtung (12) und der zweiten Erstreckungsrichtung (14) angeordnet ist, vollständig oder teilweise bedeckt.

2. Dichtungselement (10) nach Anspruch 1, **dadurch gekennzeichnet, dass** die erste Erstreckungsrichtung (12) entlang des Umfangs der nahezu zylinderförmigen Endkontur verläuft und die zweite Erstreckungsrichtung (14) parallel zu einer gedachten Mittelachse der nahezu zylinderförmigen Endkontur verläuft.

3. Dichtungselement (10) nach Anspruch 1 oder 2, **dadurch gekennzeichnet, dass** wenigstens ein Abschnitt des Dichtungselements (10) im abgewickelten Zustand eine teilzylindrische Form aufweist.

4. Dichtungselement (10) nach Anspruch 3, **dadurch gekennzeichnet, dass** der wenigstens eine Abschnitt des Dichtungselements (10), welcher im abgewickelten Zustand eine teilzylindrische Form aufweist, entlang der ersten Erstreckungsrichtung (12) ausgerichtet ist.

5. Dichtungselement (10) nach einem der Ansprüche 1 bis 4, **dadurch gekennzeichnet, dass** das Dichtungselement (10) in seiner nahezu zylinderförmigen Endkontur an seiner radial äußeren Seite entweder eine oder mehrere Nuten (26) oder eine oder mehrere Federn (28) zur Ausbildung einer Verdrehsicherung aufweist.

6. Dichtungselement (10) nach einem der Ansprüche 1 bis 4, **dadurch gekennzeichnet, dass** das Dichtungselement (10) in seiner nahezu zylinderförmigen Endkontur an seiner radial inneren Seite entweder eine oder mehrere Nuten (26) oder eine oder mehrere Federn (28) zur Ausbildung einer Verdrehsicherung aufweist.

7. Dichtungselement (10) nach einem der Ansprüche 3 bis 6, **dadurch gekennzeichnet, dass** ein Bereich zwischen wenigstens zwei Abschnitten des Dichtungselements (10), welche in abgewickelter Form eine teilzylindrische Form aufweisen, als Soll-Knickstelle, insbesondere mit reduzierter Wandstärke und/oder aus nur einem Werkstoff, ausgebildet ist.

8. Dichtungselement (10) nach einem der Ansprüche 1 bis 7, **dadurch gekennzeichnet, dass** wenigstens einer der wenigstens zwei Werkstoffe ein elastomerer Werkstoff ist.

9. Verfahren zur Herstellung eines Dichtungselements (10) nach einem der Ansprüche 1 bis 8, **dadurch gekennzeichnet, dass**
das Dichtungselement (10) mittels einem Spritzgussverfahren oder einem Formpressverfahren in einem abgewickelten Zustand urgeformt wird und anschließend eine nahezu zylinderförmige Endkontur gebildet wird.

10. Verfahren nach Anspruch 9, **dadurch gekennzeichnet, dass**
das Dichtungselement (10) aus wenigstens zwei Werkstoffen hergestellt wird, wobei die wenigstens zwei Werkstoffe während des Spritzgussverfahrens oder des Formpressverfahrens homogen oder heterogen verteilt sind.

11. Verfahren nach Anspruch 9 oder 10, **dadurch gekennzeichnet, dass** das Dichtungselement (10) nach der Urformung im abgewickelten Zustand oder in der nahezu zylinderförmigen Endkontur getempert wird.

12. Verfahren nach einem der Ansprüche 9 bis 11, **dadurch gekennzeichnet, dass** das Dichtungselement (10) vor der Bildung der nahezu zylinderförmigen Endkontur partiell oder vollständig beschichtet wird.

13. Verfahren nach einem der Ansprüche 9 bis 12, **dadurch gekennzeichnet, dass** das Dichtungselement (10) während des Spritzgussverfahrens oder des Formpressverfahrens mit einer zusätzlichen Komponente chemisch oder mechanisch verbunden wird.

14. Verwendung eines Dichtungselements (10) nach einem der Ansprüche 1 bis 8, hergestellt mittels einem Verfahren nach einem der Ansprüche 9 bis 13, zur Abdichtung eines zylindrischen Drehschiebers eines Mediumverteilers gegenüber einem Gehäuse des Mediumverteilers.

15. Verwendung nach Anspruch 14, **dadurch gekennzeichnet, dass** das Dichtungselement (10) entweder rotatorisch fixiert gegenüber dem Gehäuse ist und eine dynamische Dichtfläche mit dem zylindrischen Drehschieber ausbildet oder rotatorisch fixiert gegenüber dem zylindrischen Drehschieber ist und eine dynamische Dichtfläche mit dem Gehäuse ausbildet.

## Claims

1. Sealing element (10) having, in the unwound state, a substantially rectangular basic shape with a first direction of extension (12) and a second direction of extension (14), as well as a plurality of openings (18, 20) and an almost cylindrical final contour, said sealing element (10) being subjected to primary shaping by means of injection molding or compression molding, **characterized in that**
said sealing element (10) is made of at least two materials, with a second material completely or partially covering a first material in a third direction of extension, which is arranged orthogonally to the first direction of extension (12) and the second direction of extension (14).

2. Sealing element (10) according to claim 1, **characterized in that**
the first direction of extension (12) runs along the periphery of the approximately cylindrical final contour and the second direction of extension (14) runs parallel to an imaginary center axis of the approximately cylindrical end contour.

3. Sealing element (10) according to claim 1 or 2, **characterized in that**
at least one portion of the sealing element (10) has a partially cylindrical shape in the unwound state.

4. Sealing element (10) according to claim 3, **characterized in that**
the at least one portion of the sealing element (10), which, in the unwound state, has a partially cylindrical shape, is aligned along the first direction of extension (12).

5. Sealing element (10) according to one of claims 1 to 4, **characterized in that**
for forming a twist lock, the sealing element (10) has, in its nearly cylindrical final contour, either one or more grooves (26) or one or more springs (28) on its radially outer side.

6. Sealing element (10) according to one of claims 1 to 4, **characterized in that**
for forming a twist lock, the sealing element (10) has, in its nearly cylindrical final contour, either one or more grooves (26) or one or more springs (28) on its radially inner side.

7. Sealing element (10) according to one of claims 3 to 6, **characterized in that**
an area between at least two portions of the sealing element (10), which have a partially cylindrical shape when being unwound, is designed as a predetermined bending point which particularly includes a reduced wall thickness and/or is made of only one material.

8. Sealing element (10) according to one of claims 1 to 7, **characterized in that**
at least one of the at least two materials is an elastomeric material.

9. Method for manufacturing a sealing element (10) according to one of claims 1 to 8, **characterized in that**
the sealing element (10), in the unwound state, is subjected to primary shaping by means of injection molding or compression molding, and subsequently a nearly cylindrical final contour is formed.

10. Method according to claim 9, **characterized in that**
the sealing element (10) is manufactured from at least two materials, said at least two materials being distributed homogeneously or heterogeneously during injection molding or compression molding.

11. Method according to claim 9 or 10, **characterized in that**
the sealing element (10) is tempered after primary shaping in the unwound state or in the nearly cylindrical final contour.

12. Method according to one of claims 9 to 11, **characterized in that**
the sealing element (10) is partially or completely coated before the formation of the nearly cylindrical final contour.

13. Method according to one of claims 9 to 12, **characterized in that**
the sealing element (10) is chemically or mechanically bonded with an additional component during injection molding or compression molding.

14. Use of a sealing element (10) according to one of claims 1 to 8, manufactured by a method according to one of claims 9 to 13, for sealing a cylindrical rotary valve of a medium distributor against a housing of the medium distributor.

15. Use according to claim 14, **characterized in that**
the sealing element (10) is either rotationally fixed relative to the housing and forms a dynamic sealing surface with the cylindrical rotary valve, or is rotationally fixed relative to the cylindrical rotary valve and forms a dynamic sealing surface with the housing.

## Revendications

1. Un élément d'étanchéité (10) présentant, à l'état déroulé, une forme de base essentiellement rectangulaire avec une première direction d'extension (12) et une deuxième direction d'extension (14) ainsi qu'une pluralité d'ouvertures (18, 20) et un contour d'extrémité presque cylindrique, l'élément d'étanchéité (10) étant moulé par injection ou par compression, **caractérisé en ce que**
l'élément d'étanchéité (10) est fabriqué à partir d'au moins deux matériaux, un deuxième matériau recouvrant entièrement ou partiellement un premier matériau dans une troisième direction d'extension qui est orthogonale à la première direction d'extension (12) et à la deuxième direction d'extension (14).

2. L'élément d'étanchéité (10) selon la revendication 1, **caractérisé en ce que**
la première direction d'extension (12) s'étend le long de la circonférence du contour d'extrémité presque cylindrique et la deuxième direction d'extension (14) s'étend parallèlement à un axe central imaginaire du contour d'extrémité presque cylindrique.

3. L'élément d'étanchéité (10) selon la revendication 1 ou 2, **caractérisé en ce qu'**
au moins une partie de l'élément d'étanchéité (10) présente une forme partiellement cylindrique à l'état déroulé.

4. L'élément d'étanchéité (10) selon la revendication 3, **caractérisé en ce que**
la au moins une partie de l'élément d'étanchéité (10) qui présente une forme partiellement cylindrique à l'état déroulé est orientée le long de la première direction d'extension (12).

5. L'élément d'étanchéité (10) selon l'une des revendications 1 à 4, **caractérisé en ce que** l'élément d'étanchéité (10) présente, dans son contour d'extrémité presque cylindrique, sur son côté radialement extérieur, soit une ou plusieurs rainures (26), soit un ou plusieurs ressorts (28) pour former un dispositif anti-rotation.

6. L'élément d'étanchéité (10) selon l'une des revendications 1 à 4, **caractérisé en ce que** l'élément d'étanchéité (10) présente, dans son contour d'extrémité presque cylindrique, sur son côté radialement intérieur, soit une ou plusieurs rainures (26), soit un ou plusieurs ressorts (28) pour former un dispositif anti-rotation.

7. L'élément d'étanchéité (10) selon l'une des revendications 3 à 6, **caractérisé en ce qu'** une zone située entre au moins deux sections de l'élément d'étanchéité (10), qui présentent une forme partiellement cylindrique à l'état déroulé, est conçue comme un point de pliage théorique, en particulier avec une épaisseur de paroi réduite et/ou constitué d'un seul matériau.

8. L'élément d'étanchéité (10) selon l'une des revendications 1 à 7, **caractérisé en ce qu'** au moins l'un des au moins deux matériaux est un matériau élastomère.

9. Un procédé de fabrication d'un élément d'étanchéité (10) selon l'une des revendications 1 à 8, **caractérisé en ce que**
l'élément d'étanchéité (10) est préformé à l'état déroulé au moyen d'un procédé de moulage par injection ou d'un procédé de moulage par compression, puis un contour final presque cylindrique est formé.

10. Le procédé selon la revendication 9, **caractérisé en ce que**
l'élément d'étanchéité (10) est fabriqué à partir d'au moins deux matériaux, lesdits au moins deux matériaux étant répartis de manière homogène ou hétérogène pendant le processus de moulage par injection ou le processus de moulage par compression.

11. Le procédé selon la revendication 9 ou 10, **caractérisé en ce que**
l'élément d'étanchéité (10), après avoir été formé, est recuit à l'état déroulé ou dans le contour final presque cylindrique.

12. Le procédé selon l'une des revendications 9 à 11, **caractérisé en ce que**
l'élément d'étanchéité (10) est revêtu partiellement ou entièrement avant la formation du contour d'extrémité presque cylindrique.

13. Le procédé selon l'une des revendications 9 à 12, **caractérisé en ce que**
l'élément d'étanchéité (10) est relié chimiquement ou mécaniquement à un composant supplémentaire pendant le processus de moulage par injection ou le processus de moulage par compression.

14. Une utilisation d'un élément d'étanchéité (10) selon l'une des revendications 1 à 8, fabriqué selon l'un des procédés selon les revendications 9 à 13, pour assurer l'étanchéité d'un tiroir rotatif cylindrique d'un distributeur de fluide par rapport à un boîtier du distributeur de fluide.

15. L'utilisation selon la revendication 14, **caractérisée en ce que**
l'élément d'étanchéité (10) est soit fixé de manière rotative par rapport au boîtier et forme une surface d'étanchéité dynamique avec le tiroir rotatif cylindrique, soit fixé de manière rotative par rapport au tiroir rotatif cylindrique et forme une surface d'étanchéité dynamique avec le boîtier.
